# EUROPÄISCHE PATENTSCHRIFT

(11) **EP 1 018 692 B1**
(45) Veröffentlichungstag und Bekanntmachung des Hinweises auf die Patenterteilung: **28.06.2006**
(21) Anmeldenummer: 99123461.8
(22) Anmeldetag: 25.11.1999
(51) Int. Cl.: G06K 7/00

(54) **Sicherungssystem, Transponder und Empfangsvorrichtung**
Security system, transponder and receiving device
Système de sécurité, transpondeur et dispositif de réception

(30) Priorität: 08.01.1999 DE 19900523
(43) Veröffentlichungstag der Anmeldung: 12.07.2000
(73) Patentinhaber: Stobbe, Anatoli, 30890 Barsinghausen (DE)
(72) Erfinder: Stobbe, Anatoli, 30890 Barsinghausen (DE); Scheffler, Hartmut, 30890 Barsinghausen (DE)
(74) Vertreter: Patentanwälte Thömen & Körner

(56) Entgegenhaltungen:
- EP-A- 0 694 887
- US-A- 5 539 394
- US-A- 5 541 583

## Beschreibung

Die Erfindung betrifft ein Sicherungssystem aus einer Basisstation und wenigstens einem Transponder nach dem Oberbegriff des Anspruchs 1.

Transponder sind mobile elektronische Schaltkreise, die vornehmlich zur Identifizierung von Personen, Tieren oder Gegenständen dienen und einen berührungslosen Datenaustausch mit einer Basisstation ermöglichen.

Ein weiteres Anwendungsgebiet besteht in der Verfolgung mobiler Gegenstände für logistische Zwecke oder zur Wertsicherung.

Um dabei auch größere Bereiche überwachen und kontrollieren zu können, erfolgt eine Datenübertragung von der Basisstation zum Transponder in einem NF-Bereich, da hier eine Beeinträchtigung des Feldes durch Gegenstände, insbesondere metallischer Art, sehr gering ist und auch die Eindringtiefe in Materialien sehr hoch ist. Allerdings wird hierfür eine relativ hohe Sendeleistung benötigt.

Die Rückübertragung vom Transponder zur Basisstation erfolgt hingegen auf einer Trägerfrequenz im HF-Bereich, da hier mit sehr kleinen Antennen und einer sehr geringen Sendeleistung verhältnismäßig große Entfernungen überbrückt werden können. Wegen der geringen Batteriekapazität des Transponders ist eine geringe Sendeleistung im Interesse einer hohen Lebensdauer von großer Bedeutung.

Ein Problem besteht darin, daß Übertragungen im HF-Bereich durch Abschattungen oder auch durch Manipulationen leicht beeinträchtigt werden können. So wäre es möglich, einen Störsender im vom Transponder benutzten HF-Bereich zu betreiben oder aber der Transponder könnte durch Einwickeln in HFundurchlässige Metallfolie abgeschirmt werden.

In der älteren DE 197 45 953 A1 ist ein Diebstahl-Sicherungssystem beschrieben, bei dem eine Basisstation und ein Transponder im NF-Bereich arbeiten, und zwar auf derselben Frequenz. Damit die Basisstation mit ihrer wesentlich höheren Sendeleistung nicht den Empfang des schwachen Transpondersignals behindert, muß eine Antenne für die Transpondersignale entweder außerhalb des Wirkbereichs der Basisstation angeordnet werden oder die Basisstation und der Transponder dürfen nur wechselweise senden und darüberhinaus muß noch der Empfänger für die Transpondersignale während der Aussendungen der Bassisstation gesperrt werden. Anderenfalls wären die Anpassungszeiten, in der sich der Empfänger für die Transpondersignale nach Abklingen der starken Signale der Bassisstation auf schwache Transpondersignale anpassen kann, zu lang.

Die räumliche Trennung der Antenne für die Transpondersignale vom Wirkbereich der Basisstation müßte wegen der wesentlich höheren Sendeleistung der Basisstation im Vergleich zur Sendeleistung des Transponders so groß sein, daß eine praktische Realisierung ausscheidet. Die wechselweise Zuordnung von Sendezeiten hat den Nachteil, daß gerade wegen der geringen maximalen Datenrate bei Trägerfrequenzen im NF-Bereich eine Begrenzung der Sendezeit zu einer weiteren Einschränkung der effektiven maximalen Datenrate führt und damit praktisch die gleichzeitige Überwachung mehrerer Transponder stark beeinträchtigt oder gar unmöglich macht.

Der Erfindung liegt die Aufgabe zugrunde, ein Sicherungssystem zu schaffen, das auch bei Störungen einer Trägerfrequenz im HF-Bereich noch einen bidirektionalen Datenaustausch zwischen Transponder und Basisstation mit ausreichender Datenrate ermöglicht.

Diese Aufgabe wird bei einem Sicherungssystem nach dem Oberbegriff des Anspruchs 1 durch die Merkmale des Anspruchs 1 gelöst.

Weiterbildungen und vorteilhafte Ausgestaltungen der Erfindung ergeben sich aus den Unteransprüchen.

Erfindungsgemäß umfaßt der Transponder einen weiteren Sender für eine Datenübertragung zur Basisstation. Hierbei kann es sich um einen Sender mit einer elektromagnetischen Trägerfrequenz im NF-Bereich, einer akustischen Trägerfrequenz im Ultraschallbereich oder einer optischen Trägerfrequenz im Infrarot-Bereich handeln. Durch Umschalten auf diesen weiteren Sender kann eine Störung im HF-Bereich umgangen werden. Zwar ist zum Betrieb dieses Senders in der Regel eine höhere Energie nötig, diese wird aber für eine Datenübertragung im Notfall bewußt in Kauf genommen.

Besonders vorteilhaft ist dabei eine elektromagnetische Trägerfrequenz im NF-Bereich, denn diese verfügt ja, wie bereits oben ausgeführt, über eine hohe Eindringtiefe. Es ist dadurch möglich, auch dann noch einen Datendialog zwischen dem Transponder und der Basisstation aufrechtzuerhalten, wenn durch Einwickeln des Transponders z. B. in Aluminiumfolie eine Datenübertragung im HF-Bereich wegen der Abschirmung nicht mehr möglich wäre. Dagegen wird im NF-Bereich aufgrund der Eindringtiefe das elektromagnetische Feld nur gering beeinträchtigt, aber nicht so stark gedämpft, daß keine Datenübertragung mehr möglich wäre.

Da die Sendefrequenzen von Transponder und Basisstation im NF-Bereich unterschiedlich sind, können sie durch Selektionsmittel unterschieden werden. Transponder und Basisstation können daher gleichzeitig und unabhängig voneinander senden. Dies ermöglicht die volle Ausnutzung der bei der verwendeten Trägerfrequenz verfügbaren maximalen Datenrate und erhöht die Wahrscheinlichkeit, daß das schwache Transpondersignal auch bei Feldstärkeschwankungen oder einem schnellen Durchqueren des örtlichen Empfangsbereichs sicher empfangen und zuverlässig ausgewertet werden kann.

Vorzugsweise liegt die Trägerfrequenz des Senders der Basisstation im NF-Bereich bis 150 kHz. Diese niedrige Betriebsfrequenz zeichnet das System dahingehend aus, daß eine große Eindringtiefe in Materialien vorhanden ist und daß die Homogenität der elektrischen Felder durch Gegenstände in der Nähe der Sendeantennen nur geringfügig beeinträchtigt wird. Daher ist eine Montage auch in unmittelbarer Nähe von Metallbauteilen möglich. Im Gegensatz zu hochfrequenten Feldern treten keine Reflektionen auf, die zu unerwünschten und veränderlichen Nullstellen oder Anhebungen der Feldstärke führen könnten. Ferner werden die Felder auch durch dynamisch in das Detektionsgebiet eingeführte oder dort verlagerte Gegenstände kaum beeinträchtigt. Darüber hinaus ist auch eine Abschirmung zu Manipulationszwecken nicht oder nur begrenzt wirksam.

Die Trägerfrequenz des ersten Senders des Transponders im HF-Bereich liegt vorzugsweise oberhalb von 10 MHz. Diese hohe Frequenz hat einmal den Vorteil, daß eine Datenkommunikation im Duplexbetrieb ohne gegenseitige Beeinträchtigung der Übertragungskanäle möglich ist. Die hohe Frequenz hat zudem den Vorteil, daß der Transponder nur eine sehr kleine Antenne und eine geringe Sendeleistung benötigt. Zudem sind in dem genannten Frequenzbereich keine Störungen durch Schaltvorgänge anderer elektrischer Geräte oder durch atmosphärische Störungen vorhanden, so daß eine sichere Datenübertragung in den meisten Fällen gewährleistet ist.

Die hohe Frequenz hat allerdings den Nachteil, daß die elektromagnetischen Felder sehr leicht abgeschattet oder abgeschirmt werden können. Um im Störungsfall diesen Nachteil zu kompensieren, ist die Trägerfrequenz des zweiten Senders des Transponders im NF-Bereich ebenfalls bis 150 kHz bemessen. Es gelten somit die gleichen Übertragungseigenschaften wie bei der Trägerfrequenz der Basisstation für eine Datenübertragung zum Transponder.

Vorzugsweise wird zwischen der Basisstation und dem Transponder in Zeitabständen ein Datenaustausch zur Prüfung der Übertragungswege initialisiert und das Ergebnis ausgewertet.

Diese Maßnahme dient dazu, Aufschluß über die Qualität der Übertragungswege und damit auch über eine eventuelle Unterbrechung oder Störung in einer der Richtungen oder beiden Richtungen zu erhalten. Auf diese Weise lassen sich Störungen oder Manipulationen frühzeitig erkennen.

Im Falle eines fehlerhaften oder nicht erfolgten Datenaustausches kann wenigstens einmal die Initialisierung des Datenaustausches wiederholt werden.

Diese Maßnahme dient dazu, kurzfristige Beeinträchtigungen wie sie beispielsweise durch begrenzte Nullstellen des Feldes oder Störungen durch Spannungsspitzen beim Ein- und Ausschalten von elektrischen Geräten auftreten können, von längeren oder dauerhaften Störungen, die auf einen Defekt des Systems oder auf Manipulation hindeuten, zu unterscheiden.

Gemäß einer Weiterbildung ist vorgesehen, daß die Basisstation in Zeitabständen Anforderungssignale zum Transponder sendet und auf Antwortsignale wartet. Bei Ausbleiben eines Antwortsignals innerhalb einer festgelegten Zeitspanne wird das Anforderungssignal wiederholt oder es wird ein für den Empfang eines Antwortsignals sonst vorgesehenes positives Quittungssignal nicht gesendet oder ein negatives Quittungssignal für den Nicht-Empfang des Antwortsignals gesendet.

Diese Vorgehensweise, bei der die Prüfung von der Basisstation aus initialisiert wird, ist eine Möglichkeit, die Übertragungsverhältnisse im HF-Bereich prüfen zu können. Die Prüfung muß in diesem Fall der Transponder vornehmen, denn die Basisstation kann nicht unterscheiden, ob der Transponder sie noch empfangen, aber keine Antwortsignale mehr im HF-Bereich senden kann oder ob sich der Transponder außerhalb des Feldes der Basisstation befindet.

Eine Weiterbildung sieht vor, daß der Transponder die Wiederholungen von Anforderungssignalen oder das Ausbleiben positiver Quittungssignale für den Empfang des Antwortsignals zählt und nach einer vorgegebenen Anzahl von Wiederholungen des Anforderungssignals oder Ausbleiben des positiven Quittungssignals für den Empfang des Antwortsignals oder bei Eintreffen des negativen Quittungssignals für den Nicht-Empfang des Antwortsignals Daten im NF-Bereich mittels seines zweiten Senders aussendet.

Die mehrfachen Anforderungen durch die Basisstation oder das Ausbleiben positiver Quittungssignale für den Empfang des Antwortsignals oder das negative Quittungssignal für einen Nicht-Empfang können als Kriterium gewertet werden, daß die Übertragungsstrecke im HF-Bereich gestört ist oder daß eine sonstige Manipulation vorliegt. In diesem Fall kann durch Datenübertragung mittels des zweiten Senders im NF-Bereich ein Alarmsignal ausgelöst werden.

Alternativ ist auch bei der Prüfung eine Initialisierung durch den Transponder möglich. Hier sendet der Transponder in Zeitabständen Anwesenheitssignale im HF-Bereich zur Basisstation und wartet auf positive Quittungssignale für den Empfang der Anwesenheitssignale. Bei Ausbleiben eines solchen positiven Quittungssignals im HF-Bereich innerhalb einer festgelegten Zeitspanne wird das Anwesenheitssignal wiederholt.

Auch hierbei wird also die Ausstrahlung eines Signals wiederholt und dieser Zustand vom Transponder selbst überwacht. Analog sieht dann eine Weiterbildung vor, daß der Transponder die Wiederholungen von Anwesenheitssignalen bei Ausbleiben eines positiven Quittungssignals zählt und nach einer vorgegebenen Anzahl von Wiederholungen seines Anwesenheitssignals Daten im NF-Bereich mittels seines zweiten Senders zur Basisstation aussendet. Hier wird das Ausbleiben eines posiven Quittungssignals als Kriterium für eine Störung der Übertragung im HF-Bereich gewertet.

Zusätzlich kann wenigstens der für Störungen oder Sabotage gefährdete Übertragungsweg oder beide Übertragungswege von der Basisstation und/oder vom Transponder auf Störung oder Belegung überwacht werden. Der Datenaustausch zur Prüfung der Übertragungswege wird dann erst initialisiert, wenn die Übertragungswege als frei oder als nicht belegt verifiziert wurden.

Hierdurch wird bereits im Vorfeld abgeklärt, ob die Bedingungen für ein aussagefähiges Ergebnis bei der Prüfung der Übertragungswege gegeben sind. Dadurch wird eine unnötige Belegung der Übertragungswege mit Prüfsignalen vermieden. Da der Datenaustausch auch stets mit einem erhöhten Energieverbrauch seitens des Transponders verbunden ist, wird dadurch auch der Energiehaushalt der Batterie des Transponders verbessert. Im übrigen werden nicht aussagekräftige Prüfungen und fehlerhafte Störungsmeldungen vermieden.

Vorzugsweise sendet der Transponder Daten im NF-Bereich mittels seines zweiten Senders erst dann aus, wenn die Übertragungswege als frei oder als nicht belegt verifiziert wurden.

Auf diese Weise werden Fehlalarme vermieden, wenn auch andere Ursachen für eine Belegung der Übertragungswege vorliegen könnten und es wird besonders die Batterie des Transponders geschont, da diese für eine Datenübertragung im NF-Bereich stärker belastet wird als regulär im HF-Bereich.

Alternativ kann vorgesehen sein, daß die vom Transponder im NF-Bereich mittels eines zweiten Senders gesendeten und von der Basisstation empfangenen Daten in Verbindung mit der Überwachung der Übertragungswege auf Belegung ausgewertet und nur als gültig gewertet werden, wenn die Übertragungswege als frei oder als nicht belegt verifiziert wurden.

Diese Maßnahme ist dann zweckmäßig, wenn vom Transponder eine Belegung der Übertragungswege nicht erkannt wird oder eine Prüfung nicht vorgesehen ist. Es wird hier also ein Korrektiv für den Fall eingeführt, daß der Transponder einen Alarm abgibt, obwohl eine andere Ursache für die Belegung des Übertragungsweges vorliegt.

Als weitere Variante kann die Basisstation aufgrund empfangener Identifizierungs- oder Anwesenheitssignale der Transponder in Zeitabständen Statusmeldungen der identifizierten oder als anwesend erfaßten Transponder aussenden. Diese Statusmeldungen werden von den Transpondern ausgewertet.

Bei dieser Vorgehensweise werden also nicht einzelne Quittungssignale von der Basisstation ausgesendet, sobald ein Transponder Anwesenheitssignale sendet, sondern eine Meldung ausgesendet, die an alle Transponder adressiert ist. Die Aktivität geht in diesem Falle von der Basisstation aus. Alle im Feld befindlichen Transponder können nun zeitlich parallel auswerten, ob sie von der Basisstation bereits oder noch als anwesend gelten oder nicht.

Weiterhin kann jeder Transponder bei Auswertung der Statusmeldungen das Fehlen seiner Identitäts- oder Anwesenheitsmeldungen feststellen und sofort oder nach einer vorgegebenen Anzahl Wiederholungen der Statusmeldungen bei Fehlen seiner Identitäts- oder Anwesenheitsmeldungen Daten im NF-Bereich mittels seines zweiten Senders zur Basisstation absenden.

Im Falle einer gestörten Übertragungsstrecke oder eines gestörten Übertragungskanals im HF-Bereich vom Transponder zur Basisstation können die zur Basisstation im NF-Bereich übermittelten Daten zur Auslösung eines Alarms dienen.

Die Überwachung der Übertragungsstrecke im HF-Bereich und die Überprüfung der Aussendungen dort vom Transponder zur Basisstation bietet ein Kriterium dafür, eine Manipulation anzunehmen. Daher dienen die dann im NF-Bereich, also in dem zusätzlichen Übertragungsweg, übertragenen Daten zur Auslösung eines Alarms, damit vom Personal sofort überprüft werden kann, ob lediglich eine Störung besteht, oder ob eine Manipulation der Übertragungsstrecke vorliegt und dann die Ursache hierfür festzustellen und den Verursacher zu ermitteln.

Es ist möglich, daß alle Transponder den gleichen Alarm-Datensatz absenden.

Die Aussendung des gleichen Datensatzes hat den Vorteil, daß der Datensatz bereits bekannt ist, also nicht individuell ausgewertet werden muß, in welchem Fall alle Einzelheiten des Datensatzes erkannt und unterschieden werden müssen. Demgemäß können für den Empfang und die Identifizierung Verfahren angewendet werden, z. B. mathematische Korrelationsverfahren, mit denen es gelingt, schwache Signale des Transponders auch im Rauschen oder bei Störungen noch herauszufiltern. Dies kann dann wichtig sein, wenn ein relativ großer Bereich zu überwachen ist und bei großen Abständen zwischen Transpondern und Empfangsantennen und der daraus resultierenden geringen Feldstärke der Nutzsignale noch eine Identifizierung des Alarm-Datensatzes sichergestellt werden soll.

Alternativ ist es auch möglich, daß jeder Transponder einen individuellen Alarm-Datensatz absendet.

Diese Variante kommt dann in Betracht, wenn eine sichere Datenübertragung und damit eine gute Auswertung der empfangenen Datensätze zu erwarten ist und gleichzeitig auch eine spezielle Identifizierung des betreffenden Transponder gewünscht ist.

Der Alarm-Datensatz kann alternativ einmalig, mehrmalig, in Intervallen oder dauerhaft abgesendet werden.

Bei der einmaligen Absendung kann davon ausgegangen werden, daß die Batterie des Transponders ihre Kapazität beibehält, so daß nach Sicherstellung des Gerätes keine Wartung, also keine zusätzliche Aufladung oder kein Austausch der Batterie erforderlich ist. Allerdings besteht ein Risiko, daß die Alarm-Meldung nicht empfangen wird.

Bei einer mehrmaligen oder in Intervallen abgesendeten AlarmMeldung ist die Wahrscheinlichkeit größer, daß die AlarmMeldung von einem Empfänger der Basisstation oder einem zusätzlichen Empfänger außerhalb des Detektionsbereichs empfangen wird. Durch die intermittierende Belastung der Batterie wird auch die Gesamtdauer, in der Alarm gegeben wird, verlängert. Es besteht allerdings auch noch ein Risiko, wenn auch ein verringertes, daß wegen der Unterbrechungen in der Aussendung der Alarm nicht erkannt wird.

Die letzte Alternative einer dauerhaften Alarmaussendung bietet eine hohe Erkennungssicherheit. Allerdings ist wegen der großen Belastung der Batterie die maximale Dauer des Alarms wesentlich kleiner, als bei einer mehrmaligen oder intermittierenden Aussendung.

Ergänzend kann vorgesehen sein, daß die Frequenz, auf der eine Datenübertragung beabsichtigt ist, vom Transponder und/oder von der Basisstation zumindest unmittelbar vor der beabsichtigten Aussendung auf Belegung oder Störung überwacht wird.

Dies kann einmal die Trägerfrequenz im HF-Bereich sein, jedoch ist auch eine Überwachung im NF-Bereich zweckmäßig, da ja auch hier Manipulationen oder Störungen möglich sind.

Handelt es sich um eine Störung durch ein anderes System, das dieselben Kanäle nur zeitweise belegt, so reicht es aus, das Ende der Belegung der Frequenz abzuwarten, und dann die eigene Sendung abzusetzen. Der Vorteil dieser Maßnahme besteht darin, zwischen unterschiedlichen Störungen zu unterscheiden, Kollisionen zu verhindern und außerdem die Energieresorcen des Transponders zu schonen, wenn abzusehen ist, daß seine Aussendung wegen einer vorübergehenden Frequenzbelegung nicht empfangen werden kann.

Der Transponder kann sich außerhalb des Trägerfrequenz-Feldes der Basisstation in einem Energiesparmodus oder einem Bereitschaftsmodus befinden und wird bei Eintritt in das Trägerfrequenz-Feld der Basisstation in einen Arbeitsmodus umgeschaltet.

Auf diese Weise wird die Lebensdauer der Batterie des Transponders wesentlich erhöht, da beispielsweise für den Bereitschaftsmodus nur der Empfänger aktiv sein muß, alle übrigen Baugruppen aber abgeschaltet sein können.

Weiter ist vorgesehen, daß der Transponder durch ein Wecksignal der Basisstation in den Arbeitsmodus umgeschaltet wird und daß über das Wecksignal außerdem eine Kanalzuweisung zu einem Zeitschlitz und/oder zu einer Trägerfrequenz vorgenommen wird.

Diese Maßnahme ermöglicht es, gleichzeitig den Transponder durch Zuweisung einer Trägerfrequenz oder eines Zeitschlitzes bei späteren Antworten von anderen im Feld befindlichen Transpondern mit unterschiedlichen Kanalzuweisungen unterscheiden zu können. Außerdem besteht hier die Möglichkeit, als belegt erkannte Kanäle für eine Datenübertragung im Vorfeld auszuschalten und so die Sicherheit der Datenübertragung zu verbessern.

Weiterhin kann vorgesehen sein, daß sich der Transponder in einem unbewegten Zustand in einem Energiesparmodus befindet und bei Bewegungen in einen Bereitschaftsmodus oder einen Arbeitsmodus umgeschaltet wird.

Diese Maßnahme geht noch einen Schritt weiter und ermöglicht es, den Energiebedarf im Ruhezustand fast auf Null zu senken. Da sicherheitsrelevante Ereignisse normalerweise nur im bewegten Zustand eintreten, reicht es aus, durch einen Bewegungsmelder bei Erkennung von Bewegungen den Transponder in einen Bereitschaftsmodus oder einen Arbeitsmodus umzuschalten. In einem Bereitschaftsmodus würde nur der Empfänger mit Energie versorgt, so daß er auch dann noch nur eine geringe Energieaufnahme besitzt. Der Energiebedarf aller Baugruppen wird dann erst aktiviert, wenn der Transponder in das Feld einer Basisstation eingeführt wird.

Gemäß einer Weiterbildung kann der Transponder im Bereitschaftsmodus oder im Energiesparmodus durch ein starkes elektromagnetisches Feld im NF-Bereich in einen aktiven Zustand umgeschaltet werden.

Diese Betriebsart ist dann zweckmäßig, wenn Transponder beispielsweise an gelagerten Wertgegenständen angebracht oder in diese integriert sind und in der gelagerten Position ein Dialog mit einer mobilen Schreib- und/oder Lesevorrichtung gewünscht ist. Ein solcher Fall kann z. B. eintreten, wenn der Lagerbestand abgefragt werden soll oder auch, wenn der Zustand der Batterien der Transponder nach einer längeren Lagerzeit kontrolliert werden soll.

In dem Fall ermöglicht ein starkes elektromagnetisches Feld eine Aktivierung, wobei sich dann zunächst der Transponder wie ein passiver Transponder verhält, der seine Betriebsenergie aus dem Feld der Schreib- und/oder Lesevorrichtung bezieht.

Eine Weiterbildung sieht vor, daß der Transponder nach dem Umschalten in den aktiven Zustand mit einer verminderten Sendeleistung sendet.

Dies ist akzeptabel, da es zur Aufbringung des starken elektromagnetischen Feldes zum Wecken des Transponders im unbewegten Zustand ohnehin nötig ist, mit der Antenne der Schreib- und/oder Lesevorrichtung sehr nahe an den Transponder heranzugehen. Dementsprechend wird dann auch für die Rückübertragung vom Transponder zur Schreib- und/oder Lesevorrichtung nur eine geringe Sendeleistung benötigt, was im Interesse einer Schonung der im Transponder eingebauten Batterie zweckmäßig ist.

Der Transponder kann als Antenne für den NF-Bereich die Spule eines LC-Schwingkreises verwenden.

Es wird dadurch keine zusätzliche Antenne benötigt und außerdem ist der Wirkungsgrad auf der niedrigen Frequenz bei Verwendung einer Spule größer, als mit einem elektrisch extrem verkürzten Wellenstrahler.

Vorzugsweise wird dieselbe Spule des LC-Schwingkreises zum Empfang und zum Senden verwendet, indem der Schwingkreis vom Empfänger auf den Sender umgeschaltet wird und der Schwingkreis jeweils auf die Empfangs- bzw. Sendefrequenz abgestimmt wird.

Es ist dadurch möglich, Bauteile gemeinsam zu verwenden und dadurch die Baugröße des Transponders so klein wie möglich auszulegen.

Vorzugsweise wird der LC-Schwingkreis beim Empfang in Parallelresonanz betrieben und beim Senden in Serienresonanz umgeschaltet.

Bei Parallelresonanz erzeugt das elektromagnetische Feld am Empfangsort eine maximale Spannung, die an der Eingangsstufe des NF-Empfängers einen maximalen Signalpegel hervorruft. Beim Senden hingegen ist ein niederohmiges Verhalten des LC-Schwingkreises erforderlich, damit vom Sender ein möglichst hoher Strom in den Schwingkreis zur Erzielung eines möglichst starken elektromagnetischen Feldes eingespeist werden kann. Durch Umschalten wird also bevorzugt die die magnetische Komponente des elektromagnetischen Feldes verwertende Spule jeweils optimal im Empfangs- und Sendemodus betrieben.

Gemäß einer Weiterbildung kann die Resonanz des LC-Schwingkreises vor oder während des Sendens gemessen werden und der LC-Schwingkreis bei Abweichung seiner Resonanzfrequenz von der Sendefrequenz auf die Sendefrequenz abgestimmt werden.

Diese Maßnahme kann zweckmäßig sein, da bei Manipulationsversuchen mit metallischer Abschirmfolie eventuell die Resonanzfrequenz des LC-Schwingkreises verändert wird und damit nicht mehr die optimale Anpassung zwischen Antenne und Sender gewährleistet ist, wodurch die Reichweite beeinträchtigt würde. Da eine Abschirmung stets zu einer gewissen Dämpfung und damit Reichweitenverminderung führt, würde eine zusätzliche Verstimmung die Reichweite noch zusätzlich mindern. Durch eine Abstimmung auf die Resonanzfrequenz bei Feststellung einer Verstimmung kann wenigstens dieser Effekt kompensiert werden. Dies gilt natürlich auch dann, wenn zu Manipulationszwecken bewußt Ferritmaterial in die Nähe der Transponder-Spule gebracht wird, um eine Verstimmung der Resonanzfrequenz herbeizuführen.

Der Transponder kann wenigstens zwei Antennespulen umfassen, die zueinander versetzt sind.

Es ist dadurch möglich, die sonst ausgeprägte Richtcharakteristik einer einzigen Spule in der Weise zu verändern, daß annähernd eine Rundumcharakteristik erzielt wird.

Die Basisstation kann mehrere räumlich voneinander beabstandete HF-Empfänger mit Empfangsantennen umfassen, mit denen die vom Transponder übermittelten Signale im Diversity-Betrieb ausgewertet werden.

Dadurch lassen sich Abschattungen sowie auch Nullstellen der Felder beim Empfang der Transponder weitgehend ausschalten.

Fehlalarme, die bei gestörter HF-Übertragungsstrecke aufgrund dieser Ursachen sonst auftreten würden, werden so vermieden.

Weiterhin ist vorgesehen, daß die Emfangsantennen in der Basisstation für den NF-Bereich von den Sendeantennen für den NF-Bereich entkoppelt sind.

Dadurch wird es möglich, daß die Empfänger für den NF-Bereich auf eine möglichst große Empfindlichkeit eingestellt werden können, so daß trotz der geringen Sendeleistung der Transponder auch im NF-Bereich eine möglichst große Reichweite erzielt wird.

Weiterhin betrifft die Erfindung einen Transponder für ein Sicherungssystem nach dem Oberbegriff des Anspruchs 28.

Diesbezüglich liegt hier die Aufgabe zugrunde, einen Transponder zu schaffen, der auch bei Störungen auf einer Trägerfrequenz im HF-Bereich noch eine Übertragung zur Basisstation ermöglicht.

Diese Aufgabe wird bei einem Transponder nach dem Oberbegriff des Anspruchs 28 durch die Merkmale dieses Anspruchs gelöst.

Schließlich betrifft die Erfindung noch eine Empfangsvorrichtung nach dem Oberbegriff des Anspruchs 29.

Diesbezüglich liegt hier die Aufgabe zugrunde, eine Empfangsvorrichtung für ein Sicherungssystem zu schaffen, die auch bei Störungen einer Trägerfrequenz im HF-Bereich noch einen Empfang der vom Transponder übermittelten Daten ermöglicht.

Diese Aufgabe wird bei einer Empfangsvorrichtung nach dem Oberbegriff des Anspruchs 29 durch die im Anspruch angegebenen Merkmale gelöst. Weiterbildungen sind in den Unteransprüchen angegeben.

Die Wirkungsweise der Merkmale des Transponders und der Empfangsvorrichtung entsprechen den Merkmalen, wie sie bereits im Zusammenhang mit den entsprechenden Merkmalen des Sicherungssystems erläutert wurden.

Durch Selektionsmittel in der Empfangsvorrichtung und/oder eine räumliche Trennung der Empfangsantennen für Transpondersignale im NF-Bereich lassen sich die Sendesignale von Basisstation und Transponder wirksam entkoppeln und damit eine große Reichweite für die Transpondersignale bei guter Erkennbarkeit erzielen.

Nachfolgend wird die Erfindung anhand der Zeichnung erläutert. In der Zeichnung zeigen:
- Fig. 1: zeigt eine schematische Darstellung eines Sicherungssystems in einem Detektionsgebiet,
- Fig. 2: zeigt ein Blockschaltbild eines Transponders und
- Fig. 3: zeigt eine schematische Darstellung eines Datenkommunikationssystems mit einer Schreib- und/oder Lesevorrichtung und einem Transponder.

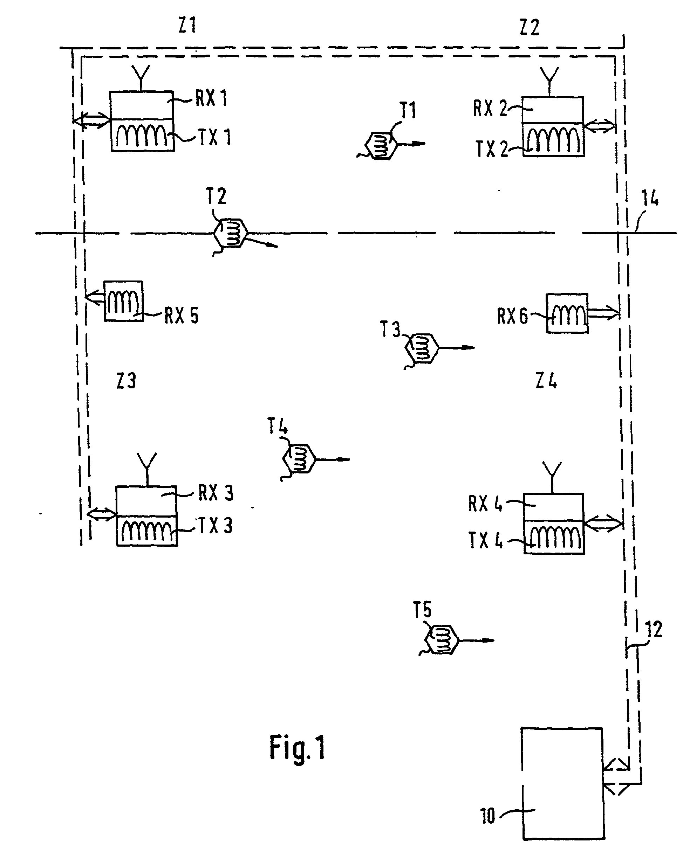

Fig. 1 zeigt eine schematische Anordnung eines Sicherungssystems in einem Detektionsgebiet mit insgesamt vier Zellen Z1, Z2, Z3, Z4, in dem sich Transponder T1, T2, T3, T4, T5 befinden. Die vier Zellen Z1, Z2, Z3, Z4 sind von einer gemeinsamen Basisstation 10 gesteuert.

Ein Anwendungsbeispiel könnte der Ein- und Ausgangsbereich eines Serviceunternehmens sein, der neben Innendienstmitarbeitern auch Außendienstmitarbeiter beschäftigt, die zur Erfüllung ihrer Aufgabe Notebook-Computer verwenden, die sie aus dem Gebäude mitnehmen können.

Zur Kontrolle der erlaubten und nicht erlaubten Mitnahme der Computer sind sämtliche Geräte mit Transpondern T1, T2, T3, T4, T5 ausgestattet, die einen im NF-Bereich bei 8 kHz arbeitenden Empfänger, eine Auswerte- und Steuerschaltung, einen im HF-Bereich bei 433 MHz arbeitenden Sender sowie einen weiteren im NF-Bereich bei 14 kHz arbeitenden Sender, Empfangs- und Sendeantennen und eine Batterie besitzen.

Die Zellen Z1, Z2, Z3, Z4 des Detektionsgebietes stellen hierbei die empfangbaren elektromagnetischen Felder von Sendevorrichtungen TX1, TX2, TX3, TX4 mit Antennen dar, die örtlich getrennt an vier Stellen der Decke im Ein- und Ausgangsbereich des Gebäudes angebracht und mit einer gemeinsamen Basisstation 10 verbunden sind. Zusätzlich sind mehrere Empfangsvorrichtungen RX1, RX2, RX3, RX4 für den HF-Bereich mit Empfangsantennen und weiterhin Empfangsvorrichtungen RX5, RX6 für den NF-Bereich vorhanden, die ebenfalls mit der Basisstation 10 verbunden sind.

Die Sendevorrichtungen TX1, TX2, TX3, TX4 sind über einen Datenbus 12 mit der Basisstation 10 synchronisiert und strahlen im NF-Bereich bei ca. 8 kHz elektromagnetische Felder aus, die sich in den vier Zellen Z1, Z2, Z3, Z4 voneinander unterscheiden. Durch die Unterschiede der Eigenschaften der elektromagnetischen Felder ist es möglich, eine Positionsbestimmung der Transponder T1, T2, T3, T4, T5 vorzunehmen. Auf diese Weise kann ermittelt werden, ob sich der Transponder mit dem Wertgegenstand in einem allgemein erlaubten Bereich befindet oder in einem Bereich, der eine besondere Genehmigung erfordert.

Die Empfangsvorrichtungen RX1, RX2, RX3, RX4 für den HF-Bereich, die mehrere Empfangskanäle abscannen und der Basisstation 10 übermitteln, sind zweckmäßig an denselben Antennenstandorten angebracht. Dagegen befinden sich die Empfangsvorrichtungen RX5, RX6 für einen zweiten Rückkanal im NF-Bereich im Abstand zu den Sendevorrichtungen TX1, TX2, TX3, TX4, um eine möglichst große Entkopplung und damit geringe Direkteinstreuung zu erzielen.

Begibt sich nun ein Mitarbeiter mit einem Gerät, das mit einem derartigen Transponder T1 ... T5 gekoppelt ist, in das Detektionsgebiet des Eingangs- und Ausgangsbereichs des Gebäudes, so gerät der Transponder T1 in das Feld einer der Zellen Z1, Z2, Z3, Z4 des Detektionsgebietes. Während sich der Transponder zunächst in einem Energiesparmodus befunden hatte, in dem der Transponder keine oder nur geringe elektrische Energie aufnahm, wurde durch das Anheben und Transportieren des Gerätes mit dem Transponder durch Detektion eines Bewegungsmelders oder Beschleunigungsaufnehmers im Transponder dieser in einen Bereitschaftsmodus geschaltet. Im Bereitschaftsmodus ist nur der Empfänger des Transponders aktiv.

Sobald der Transponder T1 in eine der Zellen Z1, Z2, Z3, Z4 des Detektionsgebietes eintritt, wird er in einen Arbeitsmodus umgeschaltet, in dem empfangene Daten ausgewertet werden können. Dabei wird dem Transponder T1 durch das Wecksignal, welches ihn vom Bereitschaftsmodus in den Arbeitsmodus umschaltet auch ein Kanal in Form eines Zeitschlitzes und/oder einer Frequenz zugewiesen.

Die Basisstation 10 veranlaßt in Zeitabständen alle in den Zellen Z1, Z2, Z3, Z4 befindlichen Transponder T1, T2, T3, T4, T5 auf ein Anforderungssignal hin ein Antwortsignal abzusetzen. Die Steuervorrichtung der Transponder veranlaßt darauf im HF-Bereich eine Rückantwort. Diese Rückantwort enthält Angaben über die Position im Detektionsgebiet. Sie kann gegebenenfalls auch Angaben über die Berechtigung enthalten, einen Bereich betreten zu dürfen, der eine Berichtigung erfordert. Entspricht die Position einer Zelle, die nur mit besonderer Berichtigung betreten werden darf und besteht die erforderliche Berechtigung hierzu nicht, so wird eine Alarmmeldung ausgelöst.

Entsprechende Anforderungssignale werden von der Basisstation 10 zyklisch gesendet und Antwortsignale von den Transpondern abgewartet und ausgewertet. Wenn das von der Basisstation 10 empfangene Antwortsignal als gültig ausgewertet wurde, wird ein weiteres Anforderungssignal erst wieder im nächsten Zyklus gesendet. Wird jedoch kein Antwortsignal empfangen oder als gültig ausgewertet, so wird das Anforderungssignal wiederholt oder ein Quittungssignal über einen Nicht-Empfang ausgesendet. Alternativ kann von der Basisstation 10 auch zyklisch ein Statussignal ausgesendet werden, das die Identifikations- oder Anwesenheitsmeldungen der "gehörten" Transponder T beinhaltet. Durch Auswertung des Statussignals kann jeder Transponder T seinerseits feststellen, ob er von der Basisstation 10 als "anwesend" erfaßt ist oder nicht.

Eine Unterbrechung des HF-Übertragungsweges kann eintreten, wenn ein Nichtberechtigter in der Absicht, das Sicherungssystem zu manipulieren, den Transponder mit Metallfolie zur Abschirmung des Senders für den HF-Bereich umwickelt. Der Transponder wiederholt sein Antwortsignal nun mehrfach und registriert die Anzahl der Wiederholungen. Eine voreinstellbare Anzahl von erfolglosen Wiederholungen stellt ein Kriterium für eine Störung der Übertragungsstrecke zwischen dem Transponder T1 und der Basisstation 10 dar. In diesem Fall aktiviert der Transponder T1 seinen zweiten Sender im NF-Bereich und setzt eine Alarmmeldung ab. Diese Alarmmeldung wird von einem der Empfänger RX5, RX6 der Basisstation 10 für den NF-Bereich empfangen und von der Basisstation 10 ausgewertet.

Eine Sabotageüberwachung ist möglich, wenn beispielsweise die Betriebsfrequenz für die Zellen, der Rückkanal oder der HF-Bereich in regelmäßigen Abständen, insbesondere vor jeder Aussendung und einer erwarteten Rückmeldung oder vor der Zuweisung eines Rückkanals auf Störsender überwacht werden.

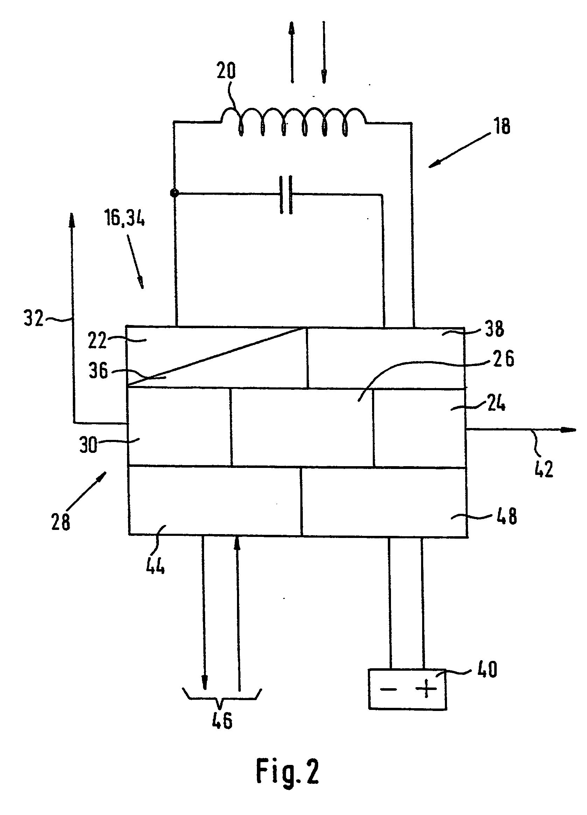

Fig. 2 zeigt ein Blockschaltbild eines für das beschriebene System geeigneten Transponders T1. Dieser umfaßt eine Empfangsvorrichtung 16 für die Betriebsfrequenz von 8 kHz, bestehend aus einem LC-Schwingkreis 18 mit einer gleichzeitig als Antenne dienenden Spule 20 und einem Empfänger 22, eine Auswerte- und Steuerschaltung 24 mit einem Speicher 26, eine erste Sendevorrichtung 28, bestehend aus einem HF-Sender 30 für 433 MHz und einer Antenne 32, eine zweite Sendevorrichtung 34, bestehend aus einem NF-Sender 36 für 14 kHz und der Spule 20 des vorhandenen LC-Schwingkreises 18 als Antenne ergänzt durch eine Schalt- und Abstimmvorrichtung 38 und eine Energiequelle 40. Die Auswerte- und Steuerschaltung 24 besitzt einen Ausgang 42, der zur Ansteuerung eines optischen oder akustischen Signalgebers oder einer Vorrichtung zu Markieren, Entwerten oder Blockieren von Wertgegenständen dienen kann. Ergänzend kann ein Interface 44 mit einem Ein- und Ausgabeport 46 für ein elektronisches Gerät vorgesehen sein. Schließlich umfaßt der Transponder noch einen Bewegungssensor 48 in Form eines Beschleunigungssensors, der mit der Auswerte- und Steuerschaltung 24 verbunden ist. Die Abstimmvorrichtung 38 beinhaltet gleichzeitig einen Sensor für eine Abstimmgröße, z.B. den Schwingkreisstrom und einen Komparator.

Befindet sich der Transponder in Ruhe, was durch den Bewegungssensor 48 ermittelt wird, so ist die Energieaufnahme vernachlässigbar. Alle Baugruppen des Transponders bis auf einen für die Auswertung des Bewegungssensors 48 zuständigen Teil der Auswerte- und Steuerschaltung 24 sind abgeschaltet. Der Strom zur Deckung des Energiebedarfs liegt dann etwa in der Größenordnung des Selbstentladestroms der Batterie.

Der Energiesparmodus im Ruhezustand wird unter Sicherheitsaspekten als akzeptabel eingestuft, da es für sicherheitsrelevante Aktionen erforderlich ist, den Transponder beziehungsweise den mit ihm verbundenen Wertgegenstand zu bewegen.

Wird durch den Bewegungssensor 48 eine Bewegung festgestellt, so wird durch den dem Bewegungssensor 48 zugeordneten Teil der Auswerte- und Steuerschaltung 24 zunächst nur die Empfangsvorrichtung 16 für die Betriebsfrequenz von 8 kHz aktiviert. Die übrigen Baugruppen des Transponders T1 bleiben hingegen noch abgeschaltet. Die Energieaufnahme bleibt damit immer noch unter einem Wert, der zu einer raschen Entladung der Energiequelle 40 führen würde. Durch die Aktivierung der Empfangsvorrichtung 16 ist aber sichergestellt, daß alle übrigen Baugruppen dann aktiviert werden können, wenn der Transponder T1 in dem Einzugsbereich einer Basisstation gelangt. In diesem Fall, der durch den Empfang des von der Basisstation 10 ausgestrahlten Feldes gekennzeichnet ist, wird die Auswerte- und Steuerschaltung 24 sowie auch die Sendevorrichtung aktiviert, damit sich der Transponder T1 bei der Basisstation als anwesend erfassen lassen kann. Außerdem ist es nun möglich, die Eigenschaften der die einzelnen Zellen kennzeichnenden Felder auszuwerten, um eine Positionsbestimmung herbeizuführen. Diese Positionsbestimmung soll ja als Kriterium dienen, ob sich der Transponder T1 in einem erlaubten oder nur mit besonderer Genehmigung zugelassenen Bereich befindet.

Normalerweise wird für den Rückkanal, das heißt für eine Datenübertragung vom Transponder T1 zur Basisstation 10 nur die erste Sendevorrichtung 28 mit dem HF-Sender 30 verwendet. Die HF-Übertragungsstrecke vom Transponder T1 zur Basisstation 10 wird dann dazu benutzt, einmal die Identifizierung des Transponders T1 vorzunehmen, zum anderen die vom Transponder T1 ermittelte Position im Detektionsbereich zur Basisstation 10 zu übermitteln und außerdem Manipulationen zu erkennen, die auf eine Störung oder Unterbrechung der Übertragungsstrecke im HF-Bereich vom Transponder T1 zur Basisstation 10 gerichtet sind. Wenn keine Manipulationen erkannt werden, also die Übertragungsstrecke im HF-Bereich einwandfrei funktioniert, werden Positionen des Transponders T1 regulär im HF-Bereich zur Basisstation 10 gemeldet. Bei Manipulationen der HF-Übertragungsstrecke wird dagegen auf die zweite Sendevorrichtung 34 umgeschaltet und die Übertragung im NF-Bereich vorgenommen.

Über die zweite Übertragungsstrecke im NF-Bereich kann dann trotz unterbrochener HF-Übertragungsstrecke ein Alarm-Datensatz abgesendet werden, der von einem oder mehreren Empfängern der Basisstation oder abgesetzten Empfängern empfangen werden kann. Es ist dann möglich, individuelle Datensätze für die unterschiedlichen Transponder zu übermitteln oder generell den gleichen Datensatz für alle Transponder. Außerdem kann die Alarmmeldung einmalig, mehrmalig, in Intervallen oder dauerhaft abgesetzt werden.

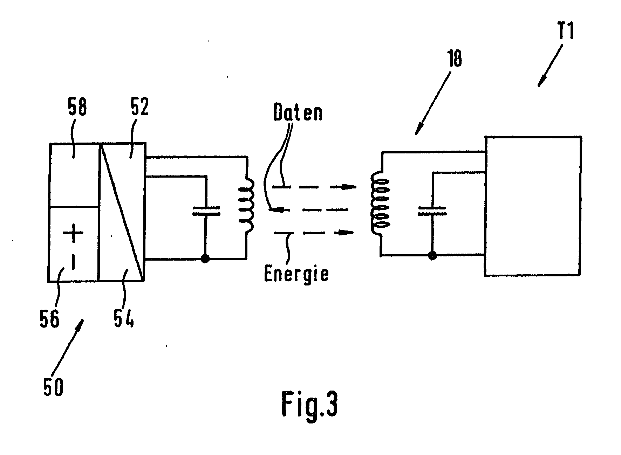

Fig. 3 zeigt eine schematische Darstellung eines Dialogs zwischen einer mobilen Schreib- und/oder Lesevorrichtung 50 und einem Transponder T1.

Die Darstellung zeigt hier einen Transponder T1, der sich außerhalb der Detektionsbereiches einer Basisstation 10 befindet, zum Beispiel einem Lagerbereich für Wertgegenstände. Es wird davon ausgegangen, daß auch dieser Transponder T1 mit einem Bewegungssensor 48 ausgestattet ist und sich der Transponder T1 im Ruhezustand im einem Energiesparmodus befindet.

Mittels des Transponders wäre es an sich möglich, Identifizierungsdaten zu ermitteln, die einen Überblick über die gelagerten Wertgegenstände ermöglichen würde. Außerdem könnte Interesse bestehen, Informationen über den Ladezustand der Enegiequelle 40 im Transponder T1 zu erfahren, um beispielsweise bei länger lagernden Wertgegenständen rechtzeitig Vorsorge zu treffen, daß das Sicherungssystem nicht durch Erschöpfung der im Transponder T1 befindlichen Enegiequelle 40 außer Funktion tritt.

Um in dieser Situation den gewünschten Dialog mit dem Transponder T1 herbeiführen zu können, ist der Transponder T1 so ausgebildet, daß er durch ein starkes elektromagnetisches Feld, das wesentlich größer als das von der Basisstation 10 empfangende elektromagnetische Feld ist, aktiviert werden kann. Hierbei verhält sich der Transponder T1 wie ein passiver Transponder, das heißt, seine Baugruppen werden von der Schreib- und/oder Lesevorrichtung 50 mit Energie versorgt. Es besteht nun die Möglichkeit, daß eine Datenkommunikation zwischen dem Transponder T1 und der Schreib- und/oder Lesevorrichtung 50 ausschließlich im Energiesparmodus des Transponders T1 durchgeführt wird, oder daß der Transponder T1 geweckt wird und dann unter Verwendung seiner eigenen Energiequelle 40 in Dialog tritt. Dabei kann allerdings ein Modus eingestellt werden, in dem der Transponder T1 nur mit einer verringerten Sendeleistung arbeitet.

Fig. 3 zeigt hierzu den Transponder T1, wie er in Fig. 2 beschrieben ist, im Dialog mit einer Schreib- und/oder Lesevorrichtung 50, die ihrerseits aus einer Sendevorrichtung 52, einer Empfangsvorrichtung 54, einer Steuervorrichtung 58 und einer Energiequelle 56 besteht. Die Energieübertragung erfolgt durch die Sendevorrichtung 52.

Es ist möglich, im Anwendungsfall eines Notebook-Computers den Transponder T1 in den Computer selbst zu integrieren und beispielsweise das BIOS zu aktivieren oder zu deaktivieren. In diesem Fall wäre es sinnvoll, die standardmäßig eingebaute Batterie des Computers zu verwenden, z.B. die Batterie für die Uhr. Außerdem können alle Bauteile des Transponders T1 auf der gemeinsamen CPU-Platine im Computer angeordnet werden.

In dieser Ausgestaltung würde der Transponder T1 sowohl über ein Drahtinterface zur CPU-Platine kommunizieren sowie über die bereits beschriebenen kontaktlosen Mittel zur Basisstation oder sonstigen Schreib- und/oder Lesevorrichtungen 50. Es können dann auch andere Geräteeigenschaften wie Serien-Nummer oder Ausstattung berührungslos zur Schreib- und/oder Lesevorrichtung übertragen werden.

## Patentansprüche

1. Sicherungssystem aus einer Basisstation (10) und wenigstens einem Transponder (T1 ... T5), zwischen denen ein Datendialog erfolgt, wobei die Basisstation (10) Daten zum Transponder (T1) auf einer Trägerfrequenz im NF-Bereich sendet und der Transponder (T1) Daten zur Basisstation (10) auf einer Trägerfrequenz im HF-Bereich zurücksendet, **dadurch gekennzeichnet, daß** der Transponder (T1) eine weitere Sendevorrichtung (34) für eine Datenübertragung zur Basisstation (10) und/oder zu einer Schreib- und/oder Lesevorrichtung (50) umfaßt, die auf einer elektromagnetischen Trägerfrequenz im NF-Bereich, einer akustischen Trägerfrequenz im Ultraschall-Bereich oder einer optischen Trägerfrequenz im Infrarot-Bereich sendet, wobei die Basisstation (10) und der Transponder (T1) auf unterschiedlichen Trägerfrequenzen im NF-Bereich senden.

2. Sicherungssystem nach Anspruch 1, **dadurch gekennzeichnet, daß** die Trägerfrequenz der weiteren Sendevorrichtung (34) der Basisstation (10) im NF-Bereich bis 150 kHz liegt.

3. Sicherungssystem nach Anspruch 1 oder 2, **dadurch gekennzeichnet, daß** die Trägerfrequenz der ersten Sendervorrichtung (28) des Transponders (T1) im HF-Bereich oberhalb von 10 MHz liegt.

4. Sicherungssystem nach einem der Ansprüche 1 bis 3, **dadurch gekennzeichnet, daß** die Trägerfrequenz der zweiten Sendervorrichtung (34) des Transponders (T1) in NF-Bereich ebenfalls bis 150 kHz liegt.

5. Sicherungssystem nach einem der Ansprüche 1 bis 4, **dadurch gekennzeichnet, daß** zwischen der Basisstation (10) und dem Transponder (T1) in Zeitabständen ein Datenaustausch zur Prüfung der Übertragungswege initialisiert und das Ergebnis ausgewertet wird.

6. Sicherungssystem nach Anspruch 5, **dadurch gekennzeichnet, daß** bei fehlerhaftem oder nicht erfolgtem Datenaustausch wenigstens einmal die Initialisierung des Datenaustausches wiederholt wird.

7. Sicherungssystem nach Anspruch 5 oder 6, **dadurch gekennzeichnet, daß** die Basisstation (10) in Zeitabständen Anforderungssignale zum Transponder (T1) sendet und auf Antwortsignale wartet und bei Ausbleiben eines Antwortsignals innerhalb einer festgelegten Zeitspanne das Anforderungssignal wiederholt oder ein für den Empfang eines Antwortsignals sonst vorgesehenes positives Quittungssignal nicht sendet oder ein negatives Quittungssignal für den Nicht-Empfang des Antwortsignals sendet.

8. Sicherungssystem nach Anspruch 7, **dadurch gekennzeichnet, daß** der Transponder (T1) die Wiederholungen von Anforderungssignalen oder das Ausbleiben positiver Quittungssignale für den Empfang des Antwortsignals zählt und nach einer vorgegebenen Anzahl von Wiederholungen des Anforderungssignals oder Ausbleiben des positiven Quittungssignals für den Empfang des Antwortsignals oder bei Eintreffen des negativen Quittungssignals für den Nicht-Empfang des Antwortsignals Daten im NF-Bereich mittels seines zweiten Senders aussendet.

9. Sicherungssystem nach Anspruch 5 oder 6, **dadurch gekennzeichnet, daß** der Transponder (T1) in Zeitabständen Anwesenheitssignale im HF-Bereich zur Basisstation (10) sendet und auf positive Quittungssignale für den Empfang der Anwesenheitssignale wartet und bei Ausbleiben eines solchen positiven Quittungssignals das Anwesenheitssignal innerhalb einer festgelegten Zeitspanne wiederholt.

10. Sicherungssystem nach Anspruch 9, **dadurch gekennzeichnet, daß** der Transponder (T1) die Wiederholungen seines Anwesenheitssignals bei Ausbleiben eines positiven Quittungssignals zählt und nach einer vorgegebenen Anzahl von Wiederholungen seines Anwesenheitssignals Daten im NF Bereich mittels seiner zweiten Sendervorrichtung (34) zur Basisstation (10) aussendet.

11. Sicherungssystem nach einem der Ansprüche 5 bis 10, **dadurch gekennzeichnet, daß** wenigstens der für Störungen oder Sabotage gefährdete Übertragungsweg oder beide Übertragungswege von der Basisstation und/oder vom Transponder auf Störung oder Belegung überwacht werden und daß der Datenaustausch zur Prüfung der Übertragungswege erst initialisiert wird, wenn die Übertragungswege als frei oder als nicht belegt verifiziert wurden.

12. Sicherungssystem nach Anspruch 8 oder 10 und 11, **dadurch gekennzeichnet, daß** der Transponder (T1) Daten im NF-Bereich mittels seines zweiten Senders erst dann aussendet, wenn die Übertragungswege als frei oder als nicht belegt verifiziert wurden.

13. Sicherungssystem nach Anspruch 8 oder 10 und 11, **dadurch gekennzeichnet, daß** die vom Transponder (T1) im NF-Bereich mittels seines zweiten Senders gesendeten und von der Basisstation empfangenen Daten in Verbindung mit der Überwachung der Übertragungswege auf Belegung ausgewertet und nur als gültig gewertet werden, wenn die Übertragungswege als frei oder als nicht belegt verifiziert wurden.

14. Sicherungssystem nach einem der Ansprüche 1 bis 4, **dadurch gekennzeichnet, daß** die Basisstation (10) aufgrund empfangener Identifizierungs- oder Anwesenheitssignale der Transponder (T1 ... T5) in Zeitabständen Statusmeldungen der identifizierten oder als anwesend erfaßten Transponder (T1 ... T5) aussendet und daß die Statusmeldungen von den Transpondern (T1 ... T5) ausgewertet werden.

15. Sicherungssystem nach Anspruch 14, **dadurch gekennzeichnet, daß** der Transponder (T1), der bei Auswertung der Statusmeldungen das Fehlen seiner Identitäts- oder Anwesenheitsmeldungen feststellt, sofort oder nach einer vorgegebenen Anzahl Wiederholungen der Statusmeldungen bei Fehlen seiner Identitäts- oder Anwesenheitsmeldungen Daten im NF-Bereich mittels seiner zweiten Sendevorrichtung (28) zur Basisstation (10) aussendet.

16. Sicherungssystem nach einem der Ansprüche 6 bis 15, **dadurch gekennzeichnet, daß** die im Falle einer gestörten Übertragungsstrecke oder eines gestörten Übertragungskanals im HF-Bereich vom Transponder (T1) zur Basisstation (10) im NF-Bereich übermittelten Daten zur Auslösung eines Alarms dienen.

17. Sicherungssystem nach Anspruch 16, **dadurch gekennzeichnet, daß** alle Transponder (T1 ... T5) den gleichen Alarm-Datensatz absenden.

18. Sicherungssystem nach Anspruch 16, **dadurch gekennzeichnet, daß** jeder Transponder (T1 ... T5) einen individuellen Alarm-Datensatz absendet.

19. Sicherungssystem nach Anspruch 17 oder 18, **dadurch gekennzeichnet, daß** der Alarm-Datensatz einmalig, mehrmalig, in Intervallen oder dauerhaft abgesendet wird.

20. Sicherungssystem nach einem der Ansprüche 1 bis 19, **dadurch gekennzeichnet, daß** die Frequenz, auf der eine Datenübertragung beabsichtigt ist, vom Transponder (T1) und/oder von der Basisstation (10) zumindest unmittelbar vor der beabsichtigten Aussendung auf Belegung oder Störung überwacht wird.

21. Sicherungssystem nach einem der Ansprüche 1 bis 20 **dadurch gekennzeichnet, daß** sich der Transponder (T1) außerhalb des Trägerfrequenz-Feldes der Basisstation (10) in einem Energiesparmodus oder einem Bereitschaftsmodus befindet, und daß der Transponder (T1) bei Eintritt in das Trägerfrequenz-Feld der Basisstation (10) in einen Arbeitsmodus umgeschaltet wird.

22. Sicherungssystem nach Anspruch 21, **dadurch gekennzeichnet, daß** der Transponder (T1) durch ein Wecksignal der Basisstation in den Arbeitsmodus umgeschaltet wird und daß über das Wecksignal außerdem eine Kanalzuweisung zu einem Zeitschlitz und/oder zu einer Trägerfrequenz vorgenommen wird.

23. Sicherungssystem nach Anspruch 21, **dadurch gekennzeichnet, daß** sich der Transponder (T1) in einem unbewegten Zustand in einem Energiesparmodus befindet und daß der Transponder (T1) bei Bewegungen in einen Bereitschaftsmodus oder einen Arbeitsmodus umgeschaltet wird.

24. Sicherungssystem nach einem der Ansprüche 21 bis 23, **dadurch gekennzeichnet, daß** der Transponder (T1) im Bereitschaftsmodus oder im Energiesparmodus durch ein starkes elektromagnetisches Feld im NF-Bereich aus dem Bereitschaftsmodus oder Energiesparmodus in einen aktiven Zustand umgeschaltet wird.

25. Sicherungssystem nach Anspruch 24, **dadurch gekennzeichnet, daß** der Transponder (T1) nach dem Umschalten in den aktiven Zustand mit einer verminderten Sendeleistung sendet.

26. Sicherungssystem nach einem oder Ansprüche 1 bis 25, **dadurch gekennzeichnet, daß** der Transponder (T1) als Antenne für den NF-Bereich die Spule (20) eines LC-Schwingkreises (18) verwendet.

27. Sicherungssystem nach Anspruch 26, **dadurch gekennzeichnet, daß** dieselbe Spule (20) des LC-Schwingkreises (18) zum Empfang und zum Senden verwendet wird, in dem der Schwingkreis (18) vom Empfänger (22) auf den Sender (30) umgeschaltet wird und der Schwingkreis (18) jeweils auf die Empfangsbeziehungsweise Sendefrequenz abgestimmt wird.

28. Sicherungssystem nach Anspruch 27, **dadurch gekennzeichnet, daß** der LC-Schwingkreis (18) beim Empfang in Parallelresonanz betrieben wird und beim Senden in Serienresonanz umgeschaltet wird.

29. Sicherungssystem nach Anspruch 27 oder 28, **dadurch gekennzeichnet, daß** die Resonanz des LC-Schwingkreises (18) vor oder während des Sendens gemessen wird und daß der LC-Schwingkreis (18) bei Abweichung seiner Resonanzfrequenz von der Sendefrequenz auf die Sendefrequenz abgestimmt wird.

30. Sicherungssystem nach einem der Ansprüche 26 bis 29, **dadurch gekennzeichnet, daß** der Transponder (T1) wenigstens zwei Antennenspulen umfaßt, die zueinander versetzt sind.

31. Sicherungssystem nach einem der Ansprüche 1 bis 30, **dadurch gekennzeichnet, daß** die Basisstation (10) mehrere räumlich voneinander beabstandete HF-Empfänger mit Empfangsantennen umfaßt, mit denen die vom Transponder (T1) übermittelten Signale im Diversity-Betrieb ausgewertet werden.

32. Sicherungssystem nach einem der Ansprüche 1 bis 31, **dadurch gekennzeichnet, daß** die Empfangsantennen in der Basisstation (10) für den NF-Bereich von den Sendeantennen für den NF-Bereich entkoppelt sind.

33. Transponder (T1) für ein Sicherungssystem aus einer Basisstation (10) und wenigstens einem Transponder (T1 ... T5), zwischen denen ein Datendialog erfolgt, wobei die Basisstation (10) Daten zum Transponder (T1) auf einer Trägerfrequenz im NF-Bereich sendet und der Transponder (T1) Daten zur Basisstation (10) auf einer Trägerfrequenz im HF-Bereich zurücksendet, **dadurch gekennzeichnet, daß** der Transponder (T1) eine weitere Sendevorrichtung (34) für eine Datenübertragung zur Basisstation (10) und/oder zu einer Schreib- und/oder Lesevorrichtung (50) umfaßt, die auf einer elektromagnetischen Trägerfrequenz im NF-Bereich, einer akustischen Trägerfrequenz im Ultraschall-Bereich oder einer optischen Trägerfrequenz im Infrarot-Bereich sendet, wobei die Basisstation (10) und der Transponder (T1) auf unterschiedlichen Trägerfrequenzen im NF-Bereich senden.

34. Empfangsvorrichtung für ein Sicherungssystem aus einer Basisstation (10) und wenigstens einem Transponder (T1 ... T5), zwischen denen ein Datendialog erfolgt, wobei die Basisstation (10) Daten zum Transponder (T1) auf einer Trägerfrequenz im NF-Bereich sendet und der Transponder (T1) Daten zur Basisstation (10) auf einer Trägerfrequenz im HF-Bereich zurücksendet, **dadurch gekennzeichnet, daß** die Empfangsvorrichtung der Basisstation (10) zusätzlich wenigstens einen Empfänger (RX5, RX6)umfaßt, der auf einer elektromagnetischen Trägerfrequenz im NF-Bereich, einer akustischen Trägerfrequenz im Ultraschall-Bereich oder einer optischen Trägerfrequenz im Infrarot-Bereich empfängt, wobei die Basisstation (10) und der Transponder (T1) auf unterschiedlichen Trägerfrequenzen im NF-Bereich senden.

35. Empfangsvorrichtung nach Anspruch 34, **dadurch gekennzeichnet, daß** Selektionsmittel vorgesehen sind, die im Sinne eines Saugkreises auf die Sendefrequenz des Transponders (T1) und damit auf die Empfangsfrequenz der Empfangsvorrichtung und im Sinne eines Sperrkreises auf die Sendefrequenz der Basisstation (10) abgestimmt sind.

36. Empfangsvorrichtung nach Anspruch 34 oder 35, **dadurch gekennzeichnet, daß** die Empfangsantennen der Empfangsvorrichtung von den Sendeantennen in der Basisstation (10) räumlich abgesetzt und/oder entkoppelt sind.

## Claims

1. Security system consisting of a base station (10) and at least one transponder (T1 ... T5), between which a data dialogue takes place, wherein the base station (10) transmits data to the transponder (T1) on a carrier frequency in the LF range and the transponder (T1) transmits data back to the base station (10) on a carrier frequency in the RF range, **characterized in that** the transponder (T1) comprises a further transmitting device (34) for data transmission to the base station (10) and/or to a read and/or write device (50), which further transmitting device transmits on an electromagnetic carrier frequency in the LF range, an acoustic carrier frequency in the ultrasonic range or an optical carrier frequency in the infrared range, wherein the base station (10) and the transponder (T1) transmit on different carrier frequencies in the LF range.

2. Security system according to Claim 1, **characterized in that** the carrier frequency of the further transmitting device (34) of the base station (10) lies in the LF range up to 150 kHz.

3. Security system according to Claim 1 or 2, **characterized in that** the carrier frequency of the first transmitting device (28) of the transponder (T1) lies in the RF range above 10 MHz.

4. Security system according to any of Claims 1 to 3, **characterized in that** the carrier frequency of the second transmitting device (34) of the transponder (T1) lies in the LF range again up to 150 kHz.

5. Security system according to any of Claims 1 to 4, **characterized in that** a data exchange for testing the transmission paths is initialized at intervals between the base station (10) and the transponder (T1), and the result is evaluated.

6. Security system according to Claim 5, **characterized in that**, if the data exchange is faulty or fails, the initialization of the data exchange is repeated at least once.

7. Security system according to Claim 5 or 6, **characterized in that** the base station (10) transmits request signals to the transponder (T1) at intervals and waits for response signals and, if no response signal is received within a defined period of time, repeats the request signal or does not transmit a positive acknowledgment signal otherwise provided for receipt of a response signal or transmits a negative acknowledgment signal for non-receipt of the response signal.

8. Security system according to Claim 7, **characterized in that** the transponder (T1) counts the repetitions of request signals or the absence of positive acknowledgment signals for receipt of the response signal and, after a predefined number of repetitions of the request signal or absence of the positive acknowledgment signal for receipt of the response signal or on receiving the negative acknowledgment signal for non-receipt of the response signal, transmits data in the LF range by means of its second transmitter.

9. Security system according to Claim 5 or 6, **characterized in that** the transponder (T1) transmits presence signals in the RF range to the base station (10) at intervals and waits for positive acknowledgment signals for receipt of the presence signals and, if no such positive acknowledgement signal is received, repeats the presence signal within a defined period of time.

10. Security system according to Claim 9, **characterized in that** the transponder (T1) counts the repetitions of its presence signal if no positive acknowledgment signal is received and, after a predefined number of repetitions of its presence signal, transmits data in the LF range to the base station (10) by means of its second transmitting device (34).

11. Security system according to any of Claims 5 to 10, **characterized in that** at least the transmission path at risk of interference or sabotage or both transmission paths are monitored by the base station and/or by the transponder for interference or occupancy, and **in that** the data exchange for testing the transmission paths is initialized only once the transmission paths have been verified as free or unoccupied.

12. Security system according to Claim 8 or 10 and 11, **characterized in that** the transponder (T1) transmits data in the LF range by means of its second transmitter only once the transmission paths have been verified as free or unoccupied.

13. Security system according to Claim 8 or 10 and 11, **characterized in that** the data transmitted by the transponder (T1) in the LF range by means of its second transmitter and received by the base station are evaluated in conjunction with the monitoring of the transmission paths for occupancy, and are deemed valid only if the transmission paths have been verified as free or unoccupied.

14. Security system according to any of Claims 1 to 4, **characterized in that** the base station (10), as a result of received identification or presence signals of the transponders (T1 ... T5), transmits at intervals status reports of the transponders (T1 ... T5) that have been identified or detected as present, and **in that** the status reports are evaluated by the transponders (T1 ... T5).

15. Security system according to Claim 14, **characterized in that** the transponder (T1) which upon evaluation of the status reports ascertains the absence of its identity or presence reports transmits data in the LF range to the base station (10) by means of its second transmitting device (28), immediately or after a predefined number of repetitions of the status reports lacking its identity or presence reports.

16. Security system according to any of Claims 6 to 15, **characterized in that** the data transmitted by the transponder (T1) to the base station (10) in the LF range in the event of a faulty transmission path or a faulty transmission channel in the RF range serves to trigger an alarm.

17. Security system according to Claim 16, **characterized in that** all the transponders (T1 ... T5) transmit the same alarm data set.

18. Security system according to Claim 16, **characterized in that** each transponder (T1 ... T5) transmits an individual alarm data set.

19. Security system according to Claim 17 or 18, **characterized in that** the alarm data set is transmitted once, several times, at intervals or continuously.

20. Security system according to any of Claims 1 to 19, **characterized in that** the frequency on which a data transmission is intended is monitored for occupancy or interference by the transponder (T1) and/or by the base station (10) at least immediately prior to the intended transmission.

21. Security system according to any of Claims 1 to 20, **characterized in that** the transponder (T1) is outside the carrier frequency field of the base station (10) in an energy-saving mode or a standby mode, and **in that** the transponder (T1) is switched to a working mode when it enters the carrier frequency field of the base station (10).

22. Security system according to Claim 21, **characterized in that** the transponder (T1) is switched to the working mode by a wake-up signal of the base station, and **in that** furthermore a channel allocation to a time slot and/or to a carrier frequency is effected via the wake-up signal.

23. Security system according to Claim 21, **characterized in that** the transponder (T1) is in a stationary state in an energy-saving mode, and **in that** the transponder (T1) is switched to a standby mode or a working mode in the event of movements.

24. Security system according to any of Claims 21 to 23, **characterized in that** the transponder (T1), in the standby mode or in the energy-saving mode, is switched from the standby mode or energy-saving mode to an active state by a strong electromagnetic field in the LF range.

25. Security system according to Claim 24, **characterized in that** the transponder (T1), after being switched to the active mode, transmits with reduced transmitting power.

26. Security system according to any of Claims 1 to 25, **characterized in that** the transponder (T1) uses the coil (20) of an LC resonant circuit (18) as the antenna for the LF range.

27. Security system according to Claim 26, **characterized in that** the same coil (20) of the LC resonant circuit (18) is used for receiving and for transmitting, by switching the resonant circuit (18) from the receiver (22) to the transmitter (30) and by tuning the resonant circuit (18) to the respective reception or transmission frequency.

28. Security system according to Claim 27, **characterized in that** the LC resonant circuit (18) is operated in parallel resonance when receiving and is switched to series resonance when transmitting.

29. Security system according to Claim 27 or 28, **characterized in that** the resonance of the LC resonant circuit (18) is measured before or during transmission, and **in that** the LC resonant circuit (18) is tuned to the transmission frequency if its resonant frequency differs from the transmission frequency.

30. Security system according to any of Claims 26 to 29, **characterized in that** the transponder (T1) comprises at least two antenna coils which are offset with respect to one another.

31. Security system according to any of Claims 1 to 30, **characterized in that** the base station (10) comprises a number of RF receivers which are physically spaced apart from one another and comprise receiving antennas, by means of which the signals transmitted by the transponder (T1) are evaluated in diversity mode.

32. Security system according to any of Claims 1 to 31, **characterized in that** the receiving antennas in the base station (10) for the LF range are decoupled from the transmitting antennas for the LF range.

33. Transponder (T1) for a security system consisting of a base station (10) and at least one transponder (T1 ... T5), between which a data dialogue takes place, wherein the base station (10) transmits data to the transponder (T1) on a carrier frequency in the LF range and the transponder (T1) transmits data back to the base station (10) on a carrier frequency in the RF range, **characterized in that** the transponder (T1) comprises a further transmitting device (34) for data transmission to the base station (10) and/or to a read and/or write device (50), which further transmitting device transmits on an electromagnetic carrier frequency in the LF range, an acoustic carrier frequency in the ultrasonic range or an optical carrier frequency in the infrared range, wherein the base station (10) and the transponder (T1) transmit on different carrier frequencies in the LF range.

34. Receiving device for a security system consisting of a base station (10) and at least one transponder (T1 ... T5), between which a data dialogue takes place, wherein the base station (10) transmits data to the transponder (T1) on a carrier frequency in the LF range and the transponder (T1) transmits data back to the base station (10) on a carrier frequency in the RF range, **characterized in that** the receiving device of the base station (10) additionally comprises at least one further receiver (RX5, RX6) which receives on an electromagnetic carrier frequency in the LF range, an acoustic carrier frequency in the ultrasonic range or an optical carrier frequency in the infrared range, wherein the base station (10) and the transponder (T1) transmit on different carrier frequencies in the LF range.

35. Receiving device according to Claim 34, **characterized in that** selection means are provided which are tuned to the transmission frequency of the transponder (T1) and thus to the reception frequency of the receiving device in the manner of an absorption circuit and are tuned to the transmission frequency of the base station (10) in the manner of a wave trap.

36. Receiving device according to Claim 34 or 35, **characterized in that** the receiving antennas of the receiving device are spatially separated and/or decoupled from the transmitting antennas in the base station (10).

## Revendications

1. Système de sécurité comprenant une station de base (10) et au moins un transpondeur (T1 à T5) entre lesquels un échange de données a lieu, la station de base (10) envoyant des données au transpondeur (T1) sur une fréquence porteuse dans le domaine des basses fréquences et le transpondeur (T1) renvoyant des données à la station de base (10) sur une fréquence porteuse dans le domaine des hautes fréquences, **caractérisé en ce que** le transpondeur (T1) comprend un dispositif émetteur supplémentaire (34) pour une transmission de données à la station de base (10) et/ou à un dispositif d'écriture et/ou de lecture (50) qui émet sur une fréquence porteuse électromagnétique dans le domaine des basses fréquences, sur une fréquence porteuse acoustique dans le domaine des ultrasons ou sur une fréquence porteuse optique dans le domaine des infrarouges, la station de base (10) et le transpondeur (T1) émettant sur des fréquences porteuses différentes dans le domaine des basses fréquences.

2. Système de sécurité selon la revendication 1, **caractérisé en ce que** la fréquence porteuse du dispositif émetteur supplémentaire (34) de la station de base (10) se situe dans le domaine des basses fréquences jusqu'à 150 kHz.

3. Système de sécurité selon la revendication 1 ou 2, **caractérisé en ce que** la fréquence porteuse du premier dispositif émetteur (28) du transpondeur (T1) se situe dans le domaine des hautes fréquences supérieures à 10 MHz.

4. Système de sécurité selon l'une des revendications 1 à 3, **caractérisé en ce que** la fréquence porteuse du second dispositif émetteur (34) du transpondeur (T1) se situe également dans le domaine des basses fréquences jusqu'à 150 kHz.

5. Système de sécurité selon l'une des revendications 1 à 4, **caractérisé en ce qu'**un échange de données destiné à vérifier les voies de transmission entre la station de base (10) et le transpondeur (T1) est initialisé et le résultat évalué à intervalles de temps.

6. Système de sécurité selon la revendication 5, **caractérisé en ce que** l'initialisation de l'échange de données est répétée au moins une fois en cas d'échange de données erroné ou n'ayant pas eu lieu.

7. Système de sécurité selon la revendication 5 ou 6, **caractérisé en ce que** la station de base (10) émet à intervalles de temps des signaux de demande et attend des signaux de réponse et que, si aucun signal de réponse ne lui parvient dans un laps de temps déterminé, elle répète le signal de demande ou n'émet pas de signal d'acquittement positif normalement prévu ou émet un signal d'acquittement négatif indiquant la non réception du signal de réponse.

8. Système de sécurité selon la revendication 7, **caractérisé en ce que** le transpondeur (T1) compte les répétitions des signaux de demande ou les absences de signaux d'acquittement positifs pour la réception du signal de réponse et émet des données dans le domaine des basses fréquences au moyen d'un second émetteur après un nombre prédéterminé de répétitions du signal de demande ou d'absences du signal d'acquittement positif de la réception du signal de réponse, ou en cas de réception du signal d'acquittement négatif de la non réception du signal de réponse.

9. Système de sécurité selon les revendications 5 ou 6, **caractérisé en ce que** le transpondeur (T1) envoie, à intervalles de temps, des signaux de présence dans le domaine des hautes fréquences à la station de base (10) et attend des signaux positifs d'acquittement de la réception des signaux de présence et répète le signal de présence dans un laps de temps déterminé en cas d'absence d'un tel signal positif d'acquittement.

10. Système de sécurité selon la revendication 9, **caractérisé en ce que** le transpondeur (T1) compte les répétitions de son signal d'absence en cas d'absence d'un signal d'acquittement positif et qu'il envoie au moyen de son second dispositif émetteur (34) des données dans le domaine des basses fréquences à la station de base (10) après un nombre prédéterminé de répétitions de son signal de présence.

11. Système de sécurité selon l'une des revendications 5 à 10, **caractérisé en ce qu'**au moins la voie de transmission exposée au risque de perturbations ou de sabotage ou les deux voies de transmission, sont surveillées sur le plan des perturbations et/ou de l'occupation par la station de base et/ou par le transpondeur, et **en ce que** l'échange de données servant à la vérification des voies de transmission est initialisé uniquement après vérification des voies de transmission et constatation de leur état libre ou non occupé.

12. Système de sécurité selon l'une des revendications 8, 10 ou 11, **caractérisé en ce que** le transpondeur (T1) n'émet des données dans le domaine des basses fréquences au moyen de son second émetteur qu'après vérification des voies de transmission et constatation de leur état libre ou non occupé.

13. Système de sécurité selon l'une des revendications 8, 10 ou 11, **caractérisé en ce que** les données émises par le transpondeur (T1) dans le domaine des basses fréquences au moyen de son second émetteur et reçues par la station de base sont évaluées, sur le plan de l'occupation, en liaison avec la surveillance des voies de transmission et qu'elles ne sont considérées comme valides qu'après vérification des voies de transmission et constatation de leur état libre ou non occupé.

14. Système de sécurité selon l'une des revendications 1 à 4, **caractérisé en ce que**, en raison de signaux d'identification ou de présence reçus des transpondeurs, la station de base (10) émet, à intervalles de temps, des messages d'état des transpondeurs (T1 à T5) identifiés ou détectés comme étant présents et **en ce que** les messages d'état sont évalués par les transpondeurs (T1 à T5).

15. Système de sécurité selon la revendication 14, **caractérisé en ce que** le transpondeur (T1) qui constate l'absence de ses messages d'identité ou de présence lors de l'évaluation des messages d'état, envoie des données dans le domaine des basses fréquences à la station de base (10) au moyen de son second dispositif émetteur (28), immédiatement ou au bout d'un nombre prédéterminé de répétitions des messages d'état en cas d'absence de ses messages d'identité ou de présence.

16. Système de sécurité selon l'une des revendications 6 à 15, **caractérisé en ce que** les données transmises dans le domaine des basses fréquences par le transpondeur (T1) à la station de base (10) servent à déclencher une alarme en cas de perturbation d'une voie de transmission ou d'un canal de transmission.

17. Système de sécurité selon la revendication 16, **caractérisé en ce que** tous les transpondeurs (T1 à T5) émettent le même enregistrement d'alarme.

18. Système de sécurité selon la revendication 16, **caractérisé en ce que** chaque transpondeur (T1 à T5) émet un enregistrement d'alarme individuel.

19. Système de sécurité selon la revendication 17 ou 18, **caractérisé en ce que** l'enregistrement d'alarme est émis une seule fois, plusieurs fois, à intervalles ou en permanence.

20. Système de sécurité selon l'une des revendications 1 à 19, **caractérisé en ce que** la fréquence sur laquelle une transmission de données est envisagée, est surveillée sur le plan d'une occupation ou d'une perturbation par le transpondeur (T1) et/ou par la station de base (10) au moins immédiatement avant l'émission prévue.

21. Système de sécurité selon l'une des revendications 1 à 20, **caractérisé en ce que** le transpondeur (T1) se trouve dans un mode d'économie d'énergie ou d'alerte en dehors du champ de la fréquence porteuse de la station de base (10), et qu'il est commuté dans un mode de travail lorsqu'il entre dans le champ de la fréquence porteuse de la station de base (10).

22. Système de sécurité selon la revendication 21, **caractérisé en ce que** le transpondeur (T1) est commuté en mode de travail par un signal de réveil de la station de base, et **en ce qu'**a lieu, en plus, une affectation de canal à un créneau temporel et/ou à une fréquence porteuse par l'intermédiaire du signal de réveil.

23. Système de sécurité selon la revendication 21, **caractérisé en ce que** le transpondeur (T1) se trouve dans un état immobile dans un mode d'économie d'énergie et que le transpondeur (T1) est commuté dans un mode d'alerte ou dans un mode de travail en cas de déplacement.

24. Système de sécurité selon l'une des revendications 21 à 23, **caractérisé en ce qu'**en état d'alerte ou en mode d'économie d'énergie, le transpondeur (T1) est commuté hors d'état d'alerte ou d'état d'économie d'énergie dans un état actif par un fort champ électromagnétique dans le domaine des basses fréquences.

25. Système de sécurité selon la revendication 24, **caractérisé en ce que** le transpondeur (T1), une fois commuté dans un état actif, émet avec une puissance émettrice réduite.

26. Système de sécurité selon l'une des revendications 1 à 25, **caractérisé en ce que** le transpondeur (T1) utilise la bobine (20) d'un circuit oscillant LC (18) comme antenne pour le domaine des basses fréquences.

27. Système de sécurité selon la revendication 26, **caractérisé en ce que** la même bobine (20) du circuit oscillant LC (18) est utilisée pour la réception et l'émission, le circuit oscillant (18) étant commuté du récepteur (22) à l'émetteur (30) et le circuit oscillant (18) étant adapté respectivement aux fréquences d'émission et de réception.

28. Système de sécurité selon la revendication 27, **caractérisé en ce qu'**à la réception, le circuit oscillant LC fonctionne en résonance parallèle et qu'à l'émission, il est commuté en résonance série.

29. Système de sécurité selon la revendication 27 ou 28, **caractérisé en ce que** la résonance du circuit oscillant LC (18) est mesurée avant ou pendant l'émission et que le circuit oscillant LC (18) est adapté à la fréquence d'émission en cas d'écart entre sa fréquence de résonance et la fréquence d'émission.

30. Système de sécurité selon l'une des revendications 26 à 29, **caractérisé en ce que** le transpondeur (T1) comprend au moins deux bobines d'antenne qui sont décalées l'une par rapport à l'autre.

31. Système de sécurité selon l'une des revendications 1 à 30, **caractérisé en ce que** la station de base (10) comprend plusieurs récepteurs HF éloignés dans l'espace les uns des autres avec des antennes de réception, à l'aide desquelles les signaux transmis par le transpondeur (T1) sont évalués en cours de fonctionnement en diversité.

32. Système de sécurité selon l'une des revendications 1 à 31, **caractérisé en ce que** les antennes de réception de la station de base (10) pour le domaine des basses fréquences sont découplées des antennes émettrices dans le domaine des basses fréquences.

33. Transpondeur (T1) pour un système de sécurité comprenant une station de base (10) et au moins un transpondeur (T1 à T5) entre lesquels a lieu un échange de données, la station de base (10) envoyant des données au transpondeur (T1) sur une fréquence porteuse dans le domaine des basses fréquences et le transpondeur (T1) renvoyant des données à la station de base (10) sur une fréquence porteuse dans le domaine des hautes fréquences, **caractérisé en ce que** le transpondeur (T1) comprend un dispositif émetteur (34) supplémentaire pour une transmission de données à la station de base (10) et/ou à un dispositif d'écriture et/ou de lecture (50), qui émet sur une fréquence porteuse électromagnétique dans le domaine des basses fréquences, sur une fréquence porteuse acoustique dans le domaine des ultrasons ou sur une fréquence porteuse optique dans le domaine des infrarouges, la station de base (10) et le transpondeur (T1) émettant sur des fréquences porteuses différentes dans le domaine des basses fréquences.

34. Dispositif récepteur pour un système de sécurité comprenant une station de base (10) et au moins un transpondeur (T1 à T5) entre lesquels a lieu un échange de données, la station de base (10) envoyant des données au transpondeur (T1) sur une fréquence porteuse dans le domaine des basses fréquences et le transpondeur (T1) renvoyant des données à la station de base (10) sur une fréquence porteuse dans le domaine des hautes fréquences, **caractérisé en ce que** le dispositif récepteur de la station de base (10) comprend en plus au moins un récepteur (RX5, RX6), qui reçoit sur une fréquence porteuse électromagnétique dans le domaine des basses fréquences, sur une fréquence porteuse acoustique dans le domaine des ultrasons ou sur une fréquence porteuse optique dans le domaine des infrarouges, la station de base (10) et le transpondeur (T1) émettant sur des fréquences porteuses différentes dans le domaine des basses fréquences.

35. Dispositif récepteur selon la revendication 34, **caractérisé en ce que** sont prévus des moyens de sélection qui sont adaptés, dans le sens d'un circuit d'absorption, à la fréquence émettrice du transpondeur (T1) et, par conséquent, à la fréquence réceptrice du dispositif récepteur et, dans le sens d'un circuit résonnant parallèle, à la fréquence émettrice de la station de base (10).

36. Dispositif récepteur selon la revendication 34 ou 35, **caractérisé en ce que**, dans la station de base (10), les antennes réceptrices du dispositif récepteur sont décalées dans l'espace des antennes émettrices et/ou découplées de celles-ci.
